# EUROPÄISCHE PATENTSCHRIFT

(11) **EP 3 549 816 B1**
(45) Veröffentlichungstag und Bekanntmachung des Hinweises auf die Patenterteilung: **19.10.2022**
(21) Anmeldenummer: 19162479.0
(22) Anmeldetag: 13.03.2019
(51) Int. Cl.: B60L 53/16, B60L 55/00, H01R 13/633, H01R 43/26, B25B 27/00, B25B 27/02

(54) **LÖSEVORRICHTUNG FÜR EINEN HOCHVOLTSTECKER**
DETACHER FOR A HIGH-VOLTAGE CONNECTOR
DISPOSITIF DE LIBÉRATION POUR UNE FICHE HAUT VOLTAGE

(30) Priorität: 04.04.2018 DE 102018205042
(43) Veröffentlichungstag der Anmeldung: 09.10.2019
(73) Patentinhaber: AUDI AG, 85045 Ingolstadt (DE)
(72) Erfinder: Kirschner, Sebastian, 85055 Ingolstadt (DE)

(56) Entgegenhaltungen:
- DE-A1-102008 030 337
- US-A1- 2012 108 106
- US-A1- 2013 012 051
- US-A1- 2015 249 305

## Beschreibung

Die Erfindung betrifft eine Lösevorrichtung für einen Hochvoltstecker.

In modernen Kraftfahrzeugen werden zunehmend elektrische Teil- oder Vollantriebe vorgesehen, die entsprechende Energiespeicher in Form von Batterien, zumeist in Form von Lithium-Ionen-Batterien, umfassen. Diese Batterien liefern Spannungen von mehreren 100 Volt. Diese Batterien werden üblicherweise aufgrund des hohen Spannungsniveaus auch Hochvolt-Batterien genannt, die Spannungen liegen in der Spannungsklasse B. Um diese Batterien entsprechend anzuschließen, kommen sogenannte Hochvoltsteckverbindungen zum Einsatz, üblicherweise umfassend einen an einem Kabel befindlichen Stecker und eine batterieseitig vorgesehene Buchse. Damit ein solcher Hochvoltstecker nicht versehentlich oder aus Unachtsamkeit vom Anwender oder einem Techniker von einer solchen Hochvoltkomponente, an der ein entsprechendes Spannungsniveau anliegt, abgezogen werden kann, ist ein solcher Hochvoltstecker respektive eine solche Hochvoltsteckverbindung mit verschiedenen Verriegelungen gesichert. Ein weit verbreitet verwendeter Hochvoltstecker ist mit der Typenbezeichnung HVA 280 in modernen Kraftfahrzeugen verbaut. Ein Anderes Beispiel solches Hochvoltsteckers ist aus US2012/108106 zu entnehmen.

Um Montagen an dem Hochvoltsystem vorzunehmen ist es erforderlich, einen solchen Hochvoltstecker, üblicherweise einen HVA 280 Stecker, am Zugangspunkt zu dem Hochvoltsystem zu ziehen, um diese spannungsfrei zu machen, also außer Betrieb zu nehmen. Diese Steckverbindung ist bei allen Arbeiten am Hochvoltsystem zu lösen, weshalb es sich bei diesem HVA 280 Stecker am Zugangspunkt für das Hochvoltsystem um denjenigen Hochvoltstecker handelt, der im Fahrzeug am häufigsten ab- und angesteckt wird. Lösevorrichtungen sind aus dem Stand der Technik, wie in US2013/012051 offenbart, bekannt, die können aber nur für eine bestimmte Art von Hochvoltsteckern angewendet werden.

Um den Hochvoltstecker HVA 280 von der Hochvoltkomponente abstecken zu können, müssen drei Verriegelungselement hintereinander gelöst werden, das heißt, dass der Hochvoltstecker in der Hochvoltbuchse über drei Verriegelungen fixiert ist. Hierzu weist der HVA 280 Hochvoltstecker drei entsprechende Verriegelungselement auf, nämlich eine längs der Steckerlängsachse zu ziehende Lasche, einen ersten Verriegelungsknopf oder Verriegelungslasche, die durch Drücken zu lösen ist, sowie einen zweiten Verriegelungsknopf oder Verriegelungslasche, der ebenfalls durch Drücken zu lösen ist. Diese Verriegelungen sind an unterschiedlichen Längspositionen am Hochvoltstecker vorgesehen. Zum Entriegeln ist zunächst das erste Verriegelungselement in Form der längs zu ziehenden Lasche zu lösen, anschließend ist der erste Knopf oder die erste Lasche zu drücken, wonach der Hochvoltstecker ein kurzes Stück aus der Hochvoltbuchse gezogen werden kann, wodurch die sogenannte Pilotlinie unterbrochen wird, mithin also der Stromkreis geöffnet wird. Erst durch anschließendes Drücken der zweiten Lasche oder des zweiten Knopfes kann der Hochvoltstecker komplett aus der Hochvoltbuchse der Hochvoltkomponente abgezogen werden.

Diese Steckverbindung ist oft im Kraftfahrzeug an Stellen angebracht, die nur sehr schwer zugänglich sind, da z. B. durch andere Komponenten oder aufgrund der Positionierung im Fahrzeug ein einfacher Zugang nicht möglich ist bzw. eine Lage gegeben ist, welche mit der Hand nur sehr schwer erreicht werden kann. Selbst wenn der Hochvoltstecker mit der Hand erreicht werden kann, kann häufig die Entriegelung nicht betätigt werden, resultierend aus der Verbaulage.

Der Erfindung liegt damit das Problem zugrunde, eine Möglichkeit für ein einfaches Abziehen eines Hochvoltsteckers anzugeben.

Zur Lösung des Problems ist erfindungsgemäß eine Lösevorrichtung für einen solchen Hochvoltstecker vorgesehen, der über zwei oder mehr Verriegelungselemente an einer Umgebungskonstruktion verriegelt ist, umfassend ein Gehäuse ausgebildet zum lösbaren Aufsetzen auf den gesteckten verriegelten Hochvoltstecker sowie zwei oder mehr Betätigungselemente, die am Gehäuse, für den Anwender betätigbar, angebracht sind und mit den Verriegelungselementen zum mechanischen Lösen der Verriegelungselemente aus ihrer Verriegelungsstellung koppelbar sind.

Erfindungsgemäß kann sich der Anwender oder Techniker zum Lösen des Hochvoltsteckers einer erfindungsgemäßen Lösungsvorrichtung bedienen, die ein Gehäuse aufweist, das lösbar auf den Hochvoltstecker aufgesetzt werden kann. In oder an dem Gehäuse sind entsprechende, vom Anwender oder Techniker bedien- oder betätigbare Betätigungsmittel vorgesehen, die in der aufgesetzten Position der Lösevorrichtung mit entsprechenden Verriegelungselementen des Hochvoltsteckers mechanisch koppelbar oder gekoppelt sind. Durch Betätigen dieser Betätigungsmittel werden die Verriegelungselemente betätigt und mechanisch aus ihrer Verriegelungsstellung gelöst.

Das Gehäuse ist entsprechend länglich ausgeführt, so dass die entsprechenden Betätigungsmittel an Positionen seitens des Anwenders oder Technikers betätigt werden können, die hinreichend weit entfernt von den eigentlichen Verriegelungselementen am Hochvoltstecker sind, so dass es nicht erforderlich ist, mit der Hand bis in den unmittelbaren Bereich der Verriegelungselemente zu greifen, was, wie einleitend beschrieben, mitunter nicht oder nur äußerst umständlich möglich ist. Das heißt, dass die Betätigungsmittel letztlich so ausgelegt sind, dass sie die Entfernung von einer Betätigungsposition, an welcher das einzelne Betätigungsmittel vom Anwender oder Techniker betätigt werden kann, zu der mechanischen Kopplung des jeweiligen Betätigungsmittels zum steckerseitigen Verriegelungselement überbrücken.

In der Anwendung muss der Anwender oder Techniker demzufolge lediglich das Gehäuse auf den Hochvoltstecker aufsetzen. Anschließend kann er von einer gut zugänglichen, vom Stecker entfernten Position durch Betätigen der Betätigungsmittel die einzelnen Verriegelungselemente aus ihrer Verriegelungsstellung bringen und den Stecker lösen und schließlich abziehen.

Das Gehäuse selbst kann gemäß einer ersten Erfindungsalternative zwei schwenkbar aneinander angelenkte Gehäusehälften aufweisen, die in der am Hochvoltstecker aufgesetzten Arbeitsstellung miteinander verbindbar sind. Es ist also als Klappgehäuse ausgeführt. Dabei können an beiden Gehäusehälften in der Arbeitsstellung zusammenwirkende Schnapp- oder Rastelemente vorgesehen sein, die einerseits eine hinreichend feste Fixierung am Hochvoltstecker ermöglichen, andererseits aber auch wieder relativ einfach gelöst werden können. Alternativ dazu ist es denkbar, an einer Gehäusehälfte eine an der anderen Gehäusehälfte lösbar anbringbare Verbindungsklammer, über die die Gehäusehälften in der Arbeitsstellung aneinander befestigbar sind, vorzusehen. Auch hierüber kann eine sichere Fixierung und einfache Lösung realisiert werden.

Alternativ zur zweiteiligen Ausführung eines solchen Klappgehäuses ist es auch denkbar, dass das Gehäuse quasi einteilig ausgeführt und seitlich offen ist, so dass es von der Seite her auf den Hochvoltstecker aufschiebbar ist. Auch auf diese Weise kann eine einfache Anordnung des Gehäuses respektive der Lösevorrichtung am Hochvoltstecker erfolgen.

Gemäß einer ersten Erfindungsausgestaltung können die Betätigungsmittel rein mechanische Betätigungsmittel sein. Dabei können, je nach Ausgestaltung respektive Anzahl der Verriegelungselemente des Hochvoltsteckers, mindestens zwei Betätigungsmittel, gegebenenfalls auch mehr Betätigungsmittel vorgesehen sein, im Falle des HVA 280 Hochvoltsteckers wären also drei Betätigungsmittel vorgesehen.

Ein Betätigungsmittel kann dabei ein reines Zugmittel sein, das mit einem zu ziehenden Verriegelungselement in der Arbeitsstellung koppelbar ist. Wie beschrieben ist im Falle eines HVA 280 Hochvoltsteckers das erste Verriegelungselement eine entsprechende Zuglasche, die über das mechanische Zugmittel betätigt werden kann. Das oder die weiteren Betätigungsmittel sind in diesem Fall Druckmittel, das oder die jeweils mit einem zu drückenden Verriegelungselement in der Arbeitsstellung koppelbar sind. Wie beschrieben weist der HVA 280 Hochvoltstecker zwei separate Laschen oder Knöpfe auf, die zu drücken sind. Jeder Lasche respektive jedem Knopf ist ein entsprechendes Betätigungsmittel in Form eines Druckmittels zugeordnet, das oder die jeweils mit einem zu drückenden Verriegelungselement in der Arbeitsstellung koppelbar sind.

Während das Zugmittel auf einfache Weise in Form einer länglichen Zuglasche ausgeführt werden kann, erfordern die Druckmittel eine entsprechende mechanische Auslegung, um einen hinreichenden Druck auf die jeweilige Lasche oder den jeweiligen Knopf, die an der Steckerseite vorgesehen sind, auszuüben. Denkbar ist es, die Druckmittel jeweils als Hebelmechanismus auszuführen, zumindest umfassend einen manuell zu betätigenden Betätigungshebel und einen mit dem Verriegelungselement zusammenwirkenden Druckhebel. Über diesen Hebelmechanismus ist es möglich, von einer entfernten Stelle durch manuelles Betätigen des Betätigungshebels einen Druckhebel so zu bewegen, dass dieser einen ausreichenden Druck auf das jeweilige Verriegelungselement ausübt.

Bei dieser Erfindungsausgestaltung kommen also manuell zu betätigende, mechanische Betätigungsmittel zum Einsatz, die Lösevorrichtung ist also eine rein manuell-mechanische Lösevorrichtung.

Alternativ dazu ist es denkbar, die Betätigungsmittel elektrisch auszulegen, das heißt, dass elektrische Betätigungsmittel vorgesehen sind. Auch hier kommen mehrere elektrische Betätigungsmittel zum Einsatz, im Falle eines HVA 280 Hochvoltstecker wären drei solche elektrischen Betätigungsmittel vorzusehen. Diese Betätigungsmittel umfassen zweckmäßigerweise jeweils einen kleinen Elektromotor, über den ein mit dem jeweiligen Verriegelungselement zusammenwirkendes Betätigungselement betätigbar ist. Dieses Betätigungselement wird über den Elektromotor in der entsprechenden Weise, die zum Lösen des jeweiligen Verriegelungselements erforderlich ist, bewegt. Ist das Verriegelungselement eine zu ziehende Lasche, so wird über den Elektromotor das zugeordnete Betätigungselement entsprechend bewegt respektive ist mit dem der Verriegelungslasche derart gekoppelt, dass diese gezogen wird. Handelt es sich bei dem Verriegelungselement um eine zu drückende Lasche oder einen Knopf, so wird das Betätigungselement über den Elektromotor ebenfalls entsprechend bewegt respektive ist mit dem Verriegelungselement so gekoppelt, dass der hinreichende Druck aufgebaut werden kann.

Zum Betätigen des jeweils zugeordneten Elektromotors sind am Gehäuse an entsprechend entfernter Positionen entsprechende Tast- oder Schaltelemente vorgesehen, die aufgrund ihrer Positionierung an der Gehäuseaußenseite vom Anwender ohne Weiteres entsprechend betätigt werden können. Bei Druck auf das entsprechende Tast- oder Schaltelement wird der entsprechende Elektromotor angesteuert, es kommt zum Bewegen des entsprechenden Betätigungselements und zum Lösen des entsprechenden steckerseitigen Verriegelungselements.

Um den Betrieb der Elektromotoren zu ermöglichen, ist es denkbar, wenn die Lösevorrichtung über ein Anschlusskabel an einer entsprechenden Stromversorgung angeschlossen ist. Vorteilhaft ist es jedoch, wenn die Lösevorrichtung mit einem an oder im Gehäuse vorgesehenen Energiespeicher in Form einer Batterie oder eines Akkumulators, die oder der zweckmäßigerweise austauschbar ist, versehen ist. In diesem Fall kann die Lösevorrichtung völlig autark arbeiten, eine Kabelverbindung zu einer entsprechenden Strom- und Spannungsversorgung ist nicht erforderlich.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: eine Prinzipdarstellung eines Hochvoltsteckers, der mit einer erfindungsgemäßen Lösevorrichtung aus seiner Verriegelungsstellung entriegelt werden kann,
- Fig. 2: eine Prinzipdarstellung einer erfindungsgemäßen Lösevorrichtung einer ersten Ausführungsform, aufgesetzt auf den Hochvoltstecker aus Fig. 1, und
- Fig. 3: eine Prinzipdarstellung einer erfindungsgemäßen Lösevorrichtung einer zweiten Ausführungsform, aufgesetzt auf den Hochvoltstecker gemäß Fig. 1.

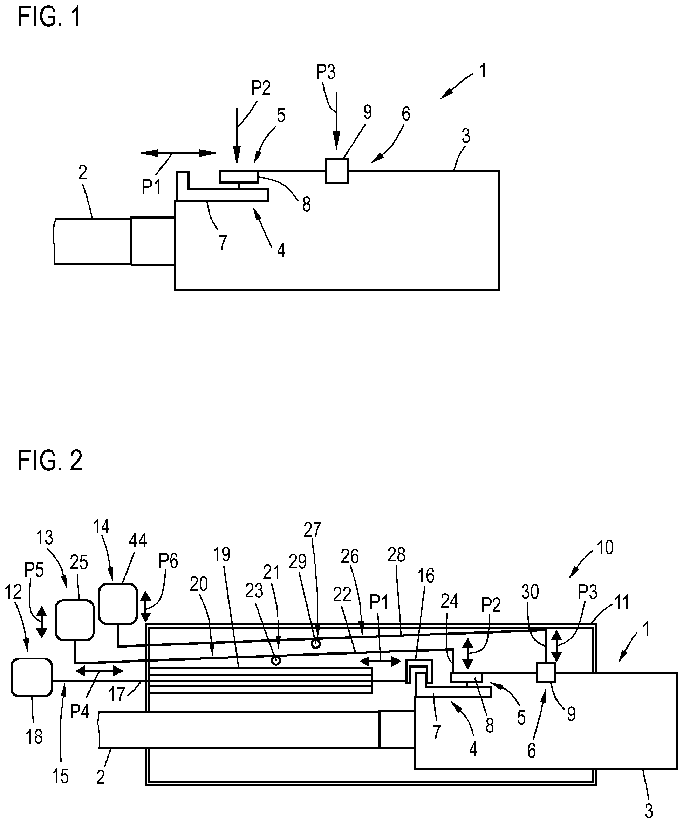

Fig. 1 zeigt einen Hochvoltstecker 1 vom Typ HVA 280, der an einem Hochvoltkabel 2 angeordnet ist. Der Hochvoltstecker 1 weist ein Steckergehäuse 3 auf, in dem, nicht näher gezeigt, entsprechende elektrische Anschlussmittel wie Kontaktzapfen oder Kontaktbuchsen etc., die mit dem Hochvoltkabel 2 elektrisch verbunden sind, angeordnet sind.

Zur Kontaktierung des Hochvoltsteckers 1 mit einem anzuschließenden Gerät wird der Hochvoltstecker 1 mit seinem Gehäuse 3 in eine entsprechende Anschlussbuche eingesteckt und dort mechanisch fest verriegelt. Hierzu sind drei Verriegelungselemente 4, 5, 6 am Steckerhäuse 3 vorgesehen, die jeweils drei separate Verriegelungsebenen definieren, in respektive an denen eine mechanische Verriegelung zu entsprechenden Verriegelungselementen an der Buchse erwirkt werden.

Das erste Verriegelungselement 4 ist als Lasche 7 ausgebildet, die wie der Pfeil P1 zeigt, axial zu ziehen ist, um die Entriegelung zu lösen.

Das zweite Verriegelungselement 5 ist als zu drückende Lasche 8 ausgebildet, die zum Entriegeln in Richtung des Pfeils P2 zu drücken ist.

Das dritte Verriegelungselement 6 schließlich ist als Druckknopf 9 ausgeführt, der zum Entriegeln ebenfalls zu drücken ist, wie durch den Pfeil P3 dargestellt ist.

Zum Entriegeln eines verriegelten Steckergehäuses sind die Verriegelungselemente 4, 5, 6 der Reihe nach zu betätigen, das heißt, dass zunächst die Lasche 7 zu ziehen ist, wonach die Drucklasche 8 zu drücken ist. Dies bewirkt eine Öffnung der geschlossenen Leitungsverbindung, das heißt, dass eine elektrische Entkopplung zur Buchse gegeben ist, gleichwohl ist aber noch eine mechanische Verriegelung über das dritte Verriegelungselement 6 gegeben. Erst wenn also der Druckknopf 9 betätigt wird, ist der Hochvoltstecker 1 entriegelt und kann aus der Buchse gezogen werden.

Da die drei Verriegelungselemente 4, 5, 6 in der Montagestellung nicht immer gut zugänglich sind, um sie zu lösen, ist erfindungsgemäß eine Lösevorrichtung 10 vorgesehen, wie sie in einer ersten Erfindungsausgestaltung in Fig. 2 gezeigt ist. Die Lösevorrichtung 10 ist hier am Hochvoltstecker 1 angesetzt, sie sitzt teilweise auf dem Gehäuse 3 auf, übergreift teilweise aber auch das Hochvoltkabel 2.

Die Lösevorrichtung 10 weist ein Gehäuse 11 auf, vorzugsweise aus Kunststoff. Dieses Gehäuse 11 umfasst beispielsweise zwei über ein Filmscharnier oder dergleichen schwenkbar zu einander gekoppelte Gehäusehälften, so dass das Gehäuse 11 aufgeklappt werden kann und im aufgeklappten Zustand um den Hochvoltstecker 1 gelegt werden kann. Um es in die Montagestellung zu bringen, werden die Gehäusehälften zusammengeschwenkt, das Gehäuse 11 also geschlossen. Die Schließstellung kann über entsprechende Rastelemente oder eine Verschlussklammer oder dergleichen fixiert werden.

Die Lösevorrichtung 10 weist drei mit den jeweiligen Verriegelungselementen 4, 5, 6 koppelbare Betätigungsmittel 12, 13, 14 auf, die zum mechanischen Lösen der jeweiligen Verriegelung dienen. Im Ausführungsbeispiel gemäß Fig. 2 sind mechanische Betätigungsmittel 12, 13, 14 vorgesehen, die vom Anwender manuell betätigt werden können, dies aber von einer Position aus, die hinreichend weit von der Montageposition der Verriegelungselemente 4, 5, 6 entfernt ist.

Das mechanische Betätigungsmittel 12 ist als Zugmittel 15 ausgeführt. Es weist einen entsprechenden Mitnehmer 16 auf, der an der Lasche 7 angreift. Der Mitnehmer 16 ist mit einer Zuglasche 17 verbunden, die mit einem Handhabungsabschnitt 18, an dem der Anwender angreifen und ziehen kann, verbunden ist. Die Zuglasche 17 ist in einer entsprechenden Führung 19 im Gehäuseinneren geführt. Zieht der Anwender am Handhabungsabschnitt 18, vgl. Pfeil P4, so wird die Lasche 7 aus ihrer Verriegelungsstellung gelöst.

Das mechanische Betätigungsmittel 13 ist als Druckmittel 20 ausgeführt und umfasst einen Hebelmechanismus 21. Ein steifer Druckhebel 22 ist um einen Schwenkpunkt 23 verschwenkbar. Der Druckhebel 22 weist einen endseitigen Betätigungsabschnitt 24 auf, mit dem es in der Montagestellung auf die Drucklasche 8 drückt. Am anderen Ende des Druckhebels 22 ist ein Handhabungsabschnitt 25 vorgesehen. Wird dieser, wie durch den Doppelpfeil P5 gezeigt, nach oben gezogen, schwenkt der Druckhebel 22 um den Schwenkpunkt 23, so dass der Abschnitt 24 auf die Drucklasche 5 drückt und diese entriegelt.

Auch das dritte mechanische Betätigungsmittel 14 ist als Druckmittel 26 ausgeführt, das ebenfalls einen Hebelmechanismus 27 mit einem länglichen Druckhebel 28, der um einen Schwenkpunkt 29 verschwenkbar ist, umfasst. Das eine Ende des Druckhebels 28 ist wiederum mit einem endseitigen Betätigungsabschnitt 30 versehen, der am Druckknopf 9 angreift, das andere Ende ist mit einem Handhabungsabschnitt 44 versehen. Wird der Handhabungsabschnitt 44, wie durch den Pfeil P6 dargestellt, nach oben gezogen, so schwenkt der Druckhebel 28 um den Schwenkpunkt 29 und der Betätigungsabschnitt 30 drückt den Druckknopf 9 und löst diesen.

Sind alle Verriegelungselement 4, 5, 6 gelöst, kann der Hochvoltstecker 1 abgezogen und anschließend die Lösevorrichtung 10 wieder entfernt werden.

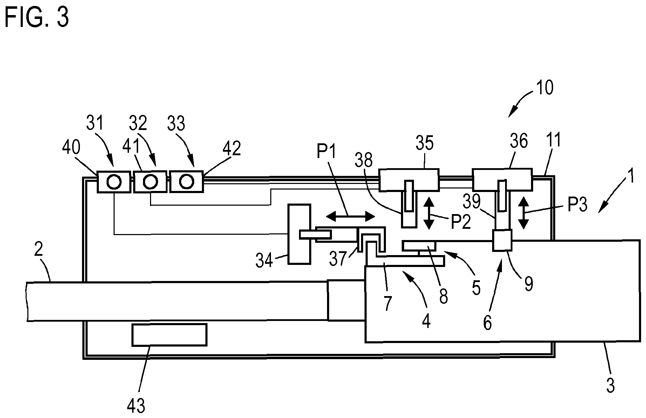

Fig. 3 zeigt eine weitere Ausgestaltung einer erfindungsgemäßen Lösevorrichtung 10, wobei für gleiche Bauteile gleiche Bezugszeichen verwendet werden. Auch diese ist am Hochvoltstecker 1, dessen Gehäuse 3 sowie das Kabel 2 teilweise umgreifend, angeordnet. Auch hier handelt es sich um ein aus zwei schwenkbaren Gehäuseteilen bestehendes Gehäuse 11, das ein einfaches Befestigen der Lösevorrichtung 10 ermöglicht.

Auch hier sind drei Betätigungsmittel 31, 32 und 33 vorgesehen, bei denen es sich jedoch um elektrische Betätigungsmittel 31, 32, 33 handelt. Jedes Betätigungsmittel 31, 32, 33 weist einen Elektromotor 34, 35, 36 auf. Mit dem Elektromotor 34 ist ein Mitnehmer 37, der an der Lasche 7 angreift, verbunden. Der Elektromotor 35 weist ein Druckstück 38 auf, das zum Drücken der Drucklasche 8 dient. Ebenso weist der Elektromotor 36 ein Druckstück 39 auf, das zum Drücken des Druckknopfes 9 dient.

Am Gehäuse 11 sind des Weiteren drei Tast- oder Schaltelemente 40, 41, 42 vorgesehen. Über das Tast- oder Schaltelement 40 kann der Elektromotor 34 betätigt werden, über das Tast- oder Schaltelement 41 der Elektromotor 35 und über das Tast- oder Schaltelement 42 der Elektromotor 36.

Im Inneren des Gehäuses 11 ist ferner ein Energiespeicher 43 vorgesehen, über den die Versorgung der elektrischen Betätigungsmittel 31, 32, 33, insbesondere der Elektromotoren 34, 35, 36 erfolgt. Bei diesem kann es sich beispielsweise um eine einfache Batterie oder einen Akkumulator handeln, der ohne Weiteres ausgetauscht werden kann.

Wird das Tast- oder Schaltelement 40 betätigt, so zieht der Elektromotor 34 den Mitnehmer 37 und damit die Lasche 7 in Richtung des Doppelpfeils P1 und löst diese Verriegelung.

Wird anschließend das Tast- oder Schaltelement 41 betätigt, so fährt der Elektromotor 35 das Druckstück 38 gegen die Drucklasche 8, wie durch den Pfeil P2 dargestellt. Diese wird gedrückt und damit gelöst.

Wird durch Betätigen des Tast- oder Schaltelements 42 der Elektromotor 36 angesteuert, so fährt dieser das Druckstück 39, wie durch den Pfeil P3 angedeutet, gegen den Druckknopf 9, so dass dieser entriegelt wird.

Die jeweiligen Entriegelungsstellungen bleiben beibehalten, das heißt, dass keine Neuverriegelung stattfindet. Sodann kann der Hochvoltstecker 1 von der Buchse abgezogen werden und die Lösevorrichtung 10 vom Hochvoltstecker 1 entfernt werden.

Mit Entfernen der Lösevorrichtung 10, egal ob bei der mechanischen Ausführung gemäß Fig. 2 oder bei der elektrischen Ausführung gemäß Fig. 3 gehen zum einen die Verriegelungselemente 4, 5, 6 wieder in ihre Ausgangsstellung zurück, die wieder ein Verriegeln beim Einstecken in eine Buchse ermöglichen.

Gleichzeitig gehen aber auch die Betätigungsmittel 12, 13, 14 respektive 31, 32, 33 wieder in ihre Ausgangsposition zurück, so dass sie bei einem erneuten Montieren an einem Hochvoltstecker 1 wieder mit den dortigen Verriegelungselementen 4, 5, 6 gekoppelt werden können.

## Patentansprüche

1. Lösevorrichtung für einen über zwei oder mehr Verriegelungselemente (4, 5, 6) an einer Umgebungskonstruktion verriegelten Hochvoltstecker, umfassend
- ein Gehäuse (11), ausgebildet zum lösbaren Aufsetzen auf den gesteckten und verriegelten Hochvoltstecker (1) sowie
- zwei oder mehr Betätigungsmittel (12, 13, 14, 31, 32, 33), die am Gehäuse, für den Anwender betätigbar, angebracht sind und die mit den Verriegelungselementen (4, 5, 6) zum mechanischen Lösen der Verriegelungselemente (4, 5, 6) aus ihrer Verriegelungsstellung koppelbar sind.

2. Lösevorrichtung nach Anspruch 1,
**dadurch gekennzeichnet,**
**dass** das Gehäuse (11) zwei schwenkbar aneinander angelenkte Gehäusehälften aufweist, die in der am Hochvoltstecker (1) aufgesetzten Arbeitsstellung miteinander verbindbar sind.

3. Lösevorrichtung nach Anspruch 2,
**dadurch gekennzeichnet,**
**dass** an beiden Gehäusehälften in der Arbeitsstellung zusammenwirkende Schnapp- oder Rastelemente vorgesehen sind.

4. Lösevorrichtung nach Anspruch 2,
**dadurch gekennzeichnet,**
**dass** an einer Gehäusehälfte eine an der anderen Gehäusehälfte lösbar anbringbare Verbindungsklammer, über die die Gehäusehälften in der Arbeitsstellung aneinander befestigt sind, vorgesehen ist.

5. Lösevorrichtung nach Anspruch 1,
**dadurch gekennzeichnet,**
**dass** das Gehäuse (11) seitlich offen ist und von der Seite her auf den Hochvoltstecker (1) aufschiebbar ist.

6. Lösevorrichtung nach einem der vorangehenden Ansprüche,
**dadurch gekennzeichnet,**
**dass** die Betätigungsmittel mechanische Betätigungsmittel (12, 13, 14) sind.

7. Lösevorrichtung nach Anspruch 6,
**dadurch gekennzeichnet,**
**dass** ein Betätigungsmittel (12) ein Zugmittel (15) ist, das mit einem zu ziehenden Verriegelungselement (4) in der Arbeitsstellung koppelbar ist, und das oder die weiteren Betätigungsmittel (13, 14) Druckmittel (20, 26) sind, das oder die jeweils mit einem zu drückenden Verriegelungselement (13, 14) in der Arbeitsstellung koppelbar sind.

8. Lösevorrichtung nach Anspruch 7,
**dadurch gekennzeichnet,**
**dass** die Druckmittel (13, 14) jeweils als Hebelmechanismus (21, 27) ausgeführt sind, zumindest umfassend einen manuell zu betätigenden Betätigungsabschnitt (25, 31) und einen mit dem Verriegelungselement (5, 6) zusammenwirkenden Druckhebel (22, 28).

9. Lösevorrichtung nach einem der Ansprüche 1 bis 5,
**dadurch gekennzeichnet,**
**dass** die Betätigungsmittel elektrische Betätigungsmittel (31, 32, 33) sind.

10. Lösevorrichtung nach Anspruch 9,
**dadurch gekennzeichnet,**
**dass** die Betätigungsmittel (31, 32, 33) jeweils einen Elektromotor (34, 35, 36) umfassen, über den ein mit dem jeweiligen Verriegelungselement (4, 5, 6) zusammenwirkendes Betätigungselement (37, 38, 39) betätigbar ist.

11. Lösevorrichtung nach Anspruch 10,
**dadurch gekennzeichnet,**
**dass** am Gehäuse (11) Tast- oder Schaltelemente (40, 41, 42) zum Betätigen eines jeweils zugeordneten Elektromotors (34, 35, 36) vorgesehen sind.

12. Lösevorrichtung nach einem der Ansprüche 9 bis 11,
**dadurch gekennzeichnet,**
**dass** am oder im Gehäuse (11) ein Energiespeicher (43) vorgesehen ist.

## Claims

1. Detacher for a high-voltage connector locked on an ambient construction via two or more locking elements (4, 5, 6), comprising
- a housing (11) designed to be set detachably onto the plugged and locked high-voltage connector (1) and
- two or more operating means (12, 13, 14, 31, 32, 33) which are mounted on the housing and are able to be actuated by the user and which can be coupled with the locking elements (4, 5, 6) for the mechanical releasing of the locking elements (4, 5, 6) from their locked position.

2. Detacher according to claim 1,
**characterised in**
**that** the housing (11) has two housing halves which are articulated in a pivotal manner on one another, which can be connected to one another in the working position in which they are set upon the high-voltage connector (1).

3. Detacher according to claim 2,
**characterised in**
**that** snap-in or latching elements which interact in the working position are provided on both housing halves.

4. Detacher according to claim 2,
**characterised in**
**that** on one housing half is provided a connecting clamp which can be mounted detachably to the other housing half, via which the housing halves are fastened to one another in the working position.

5. Detacher according to claim 1,
**characterised in**
**that** the housing (11) is laterally open and can be pushed onto the high-voltage connector (1) from the side.

6. Detacher according to any of the preceding claims,
**characterised in**
**that** the operating means are mechanical operating means (12, 13, 14).

7. Detacher according to claim 6,
**characterised in**
**that** one operating means (12) is a traction means (15) which can be coupled in the working position with a locking element (4) to be drawn, and that the further operating means (13, 14) is or are pressure means (20, 26) which is or are coupled in the working position with a locking element (13, 14) to be pushed.

8. Detacher according to claim 7,
**characterised in**
**that** the pressure means (13, 14) are designed respectively as a lever mechanism (21, 27), at least comprising an operating section (25, 31) to be actuated manually, and a pressure lever (22, 28) interacting with the locking element (5, 6).

9. Detacher according to any of claims 1 to 5,
**characterised in**
**that** the operating means are electrical operating means (31, 32, 33).

10. Detacher according to claim 9,
**characterised in**
**that** the operating means (31, 32, 33) comprise in each case an electric motor (34, 35, 26), via which an operating element (37, 38, 39) interacting with the respective locking element (4, 5, 6) can be operated.

11. Detacher according to claim 10,
**characterised in**
**that** button or switch elements (40, 41, 42) for actuating a respectively assigned electric motor (34, 35, 36) are provided on the housing (11).

12. Detacher according to any of claims 9 to 11,
**characterised in**
**that** an energy store (43) is provided on or in the housing (11).

## Revendications

1. Dispositif de libération pour une fiche haut voltage verrouillée par le biais de deux ou plus éléments de verrouillage (4, 5, 6) sur une construction environnante, comprenant
- un boîtier (11), réalisé pour le placement détachable sur la fiche haut voltage enfichée et verrouillée (1) ainsi que
- deux ou plus moyens d'actionnement (12, 13, 14, 31, 32, 33) qui sont montés au niveau du boîtier, de manière actionnable pour l'utilisateur, et qui sont couplables avec les éléments de verrouillage (4, 5, 6) pour la libération mécanique des éléments de verrouillage (4, 5, 6) de leur position de verrouillage.

2. Dispositif de libération selon la revendication 1,
**caractérisé en ce**
**que** le boîtier (11) présente deux moitiés de boîtier articulées de manière pivotante l'une à l'autre qui sont reliables entre elles dans la position de travail placée sur la fiche haut voltage (1).

3. Dispositif de libération selon la revendication 2,
**caractérisé en ce**
**que** des éléments d'enclenchement ou d'arrêt concourants sont prévus au niveau des deux moitiés de boîtier dans la position de travail.

4. Dispositif de libération selon la revendication 2,
**caractérisé en ce**
**qu'**une bride de liaison pouvant être montée de manière détachable au niveau de l'autre moitié de boîtier, par le biais de laquelle les moitiés de boîtier sont fixées dans la position de travail l'une à l'autre, est prévue au niveau d'une moitié de boîtier.

5. Dispositif de libération selon la revendication 1,
**caractérisé en ce**
**que** le boîtier (11) est ouvert latéralement et peut être poussé depuis le côté sur la fiche haut voltage (1).

6. Dispositif de libération selon l'une quelconque des revendications précédentes,
**caractérisé en ce**
**que** les moyens d'actionnement sont des moyens d'actionnement (12, 13, 14) mécaniques.

7. Dispositif de libération selon la revendication 6,
**caractérisé en ce**
**qu'**un moyen d'actionnement (12) est un moyen de traction (15) qui est couplable avec un élément de verrouillage (4) à tirer dans la position de travail, et le ou les autres moyens d'actionnement (13, 14) sont des moyens de pression (20, 26), qui est/sont couplable(s) respectivement à un élément de verrouillage (13, 14) à presser dans la position de travail.

8. Dispositif de libération selon la revendication 7,
**caractérisé en ce**
**que** les moyens de pression (13, 14) sont réalisés respectivement comme mécanisme de levage (21, 27), comprenant au moins une section d'actionnement (25, 31) à actionner manuellement et un levier de pression (22, 28) coagissant avec l'élément de verrouillage (5, 6).

9. Dispositif de libération selon l'une quelconque des revendications 1 à 5,
**caractérisé en ce**
**que** les moyens d'actionnement sont des moyens d'actionnement (31, 32, 33) électriques.

10. Dispositif de libération selon la revendication 9,
**caractérisé en ce**
**que** les moyens d'actionnement (31, 32, 33) comprennent respectivement un moteur électrique (34, 35, 36), par le biais duquel un élément d'actionnement (37, 38, 39) coagissant avec l'élément de verrouillage (4, 5, 6) respectif peut être actionné.

11. Dispositif de libération selon la revendication 10,
**caractérisé en ce**
**que** des éléments de palpage ou de commutation (40, 41, 42) sont prévus au niveau du boîtier (11) pour l'actionnement d'un moteur électrique (34, 35, 36) associé respectivement.

12. Dispositif de libération selon l'une quelconque des revendications 9 à 11,
**caractérisé en ce**
**qu'**un accumulateur d'énergie (43) est prévu au niveau du ou dans le boîtier (11).
